Europäisches Patentamt

European Patent Office

Office européen des brevets

(11) Publication number: **0 106 699**
**A2**

(12) # EUROPEAN PATENT APPLICATION

(21) Application number: **83306316.7**

(22) Date of filing: **18.10.83**

(51) Int. Cl.³: **F 02 M 21/04**
**F 16 K 11/08, B 01 F 5/00**

(30) Priority: **18.10.82 CA 413659**

(43) Date of publication of application:
**25.04.84 Bulletin 84/17**

(84) Designated Contracting States:
**AT BE CH DE FR GB IT LI LU NL SE**

(71) Applicant: **OXIN CARBURETION INC.**
**1523 Warden Avenue**
**Scarborough Ontario M1R 4Z8(CA)**

(72) Inventor: **Thomas, Wayne R.**
**RR Nr. 3**
**Bancroft Ontario, K0L 1CO(CA)**

(74) Representative: **Orr, William McLean et al,**
**Haseltine Lake & Co Hazlitt House 28 Southampton**
**Buildings Chancery Lane**
**London WC2A 1AT(GB)**

(54) Improvements in valve mixers.

(57) There is provided a method and apparatus for delivering a substantially constant ratio of two gases to an air intake where a varying suction exists. One gas is passed through an inlet port (10) of a body to the inlet end of a passageway in a rotary valve (80) captured within a suitable chamber (73) in the body, thence to the outlet end of the passageway, thence through an outlet portion (69), thence to the air intake. The other gas is passed to a first tube (95) extending along the axis of the rotary valve within the passageway, with a second tube (97) closely enveloping the first. One tube rotates with the rotary valve, the other is fixed. Both tubes have apertures which are in registry when the rotary valve is oriented such that the passageway communicates with both ports. The angular orientation of the rotary valve is adjusted in such a way as to maintain a substantially constant pressure drop between two points respectively upstream and downstream of the rotary valve.

EP 0 106 699 A2

./...

FIG. 2

## IMPROVEMENTS IN VALVE MIXERS

This invention relates generally to the area of mixing two different gases together in a desired proportion at varying flow rates. More particularly, this invention pertains to a valve mixer for two gases such as propane and combustion air, which has particular applicability to internal combustion engines in which the level of intake suction varies depending upon the degree of throttling.

BACKGROUND OF THIS INVENTION

Exemplary cf the prior art to which this. invention pertains are the following U.S. Patents

U.S. 4,020,810, issued May 3, 1977 to Baverstock.

U.S. 3,846,094, issued November 5, 1974 to Baverstock.

U.S. 3,545,948, issued December 8, 1970 to Baverstock.

U.S. 2,927,848, issued March 8, 1960 to Baverstock.

U.S. 2,368,680, issued February 6, 1945 to Riise.

Generally speaking, the existing propane mixers as exemplified by the patents identified above rely on various non-linear devices such as springs to vary the flow of the gases. These mixers also use various non-linear devices such as orifice cones which are very sensitive to position and geometry. The prior art mixers generally require idle adjustment and full throttle adjustment to compensate for these non-linear characteristics. They are not constant velocity carburettors.

Many of the prior art devices utilize diaphragms which permit airflow under them, or squeeze the airflow off. This leads to poor airflow, and also carries the risk of burning the diaphragm if backfiring takes place.

A general aim of the present invention is to provide a valve mixer for two gases which is capable of providing a constant proportion of the two gases, regardless of flow, and which also promotes good mixing especially at low flow levels, and is not sensitive to backfire.

GENERAL DESCRIPTION OF THIS INVENTION

Accordingly, this invention provides a method and apparatus for delivering a substantially constant ratio of two gases to an intake, such as the intake manifold of an internal combustion engine, where a varying suction exists. One of the gases, for example combustion air, is passed through an inlet port in a body to the inlet end of a passageway in a rotary valve contained within the body, thence to the outlet end of the passageway, thence through an outlet port in the body, thence to the manifold intake. The other gas is passed to a first tube extending along the axis of the rotary valve within the passageway, and a second tube closely envelopes the first. One of the tubes rotates with the rotary valve, the other is fixed. The tubes have apertures which are in registry when the rotary valve is oriented so that the passageway communicates with both ports. The angular orientation of the rotary valve is then adjusted to maintain a substantially constant pressure drop between two points respectively upstream and downstream of the rotary valve.

GENERAL DESCRIPTION OF THE DRAWINGS

One embodiment of this invention is illustrated in the accompanying drawings, in which like numerals denote like parts throughout the several views, and in which:

Figure 1 is a schematic view of the different components in an overall carburetion system utilizing the valve mixer of this invention;

Figure 2 is a sectional view taken axially through the valve mixer of this invention, and also showing the immediately adjacent parts of the system as a whole;

Figure 3 is a partly broken away perspective view showing the valve mixer of this invention; and

Figure 4 is a cross sectional view taken at the line 4-4 in Figure 3.

~~DETAILED DESCRIPTION OF THE DRAWINGS~~

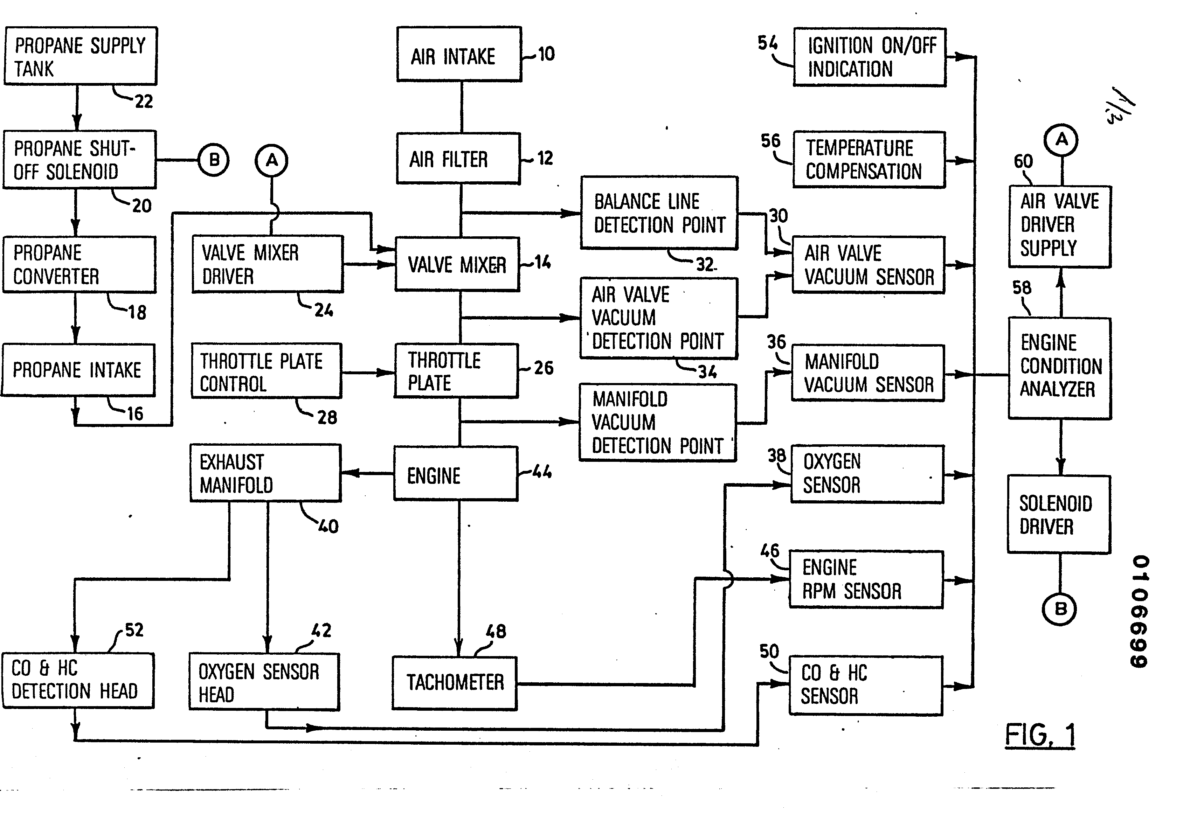

Attention is first directed to Figure 1, which shows the air and fuel flow from an air intake and a propane intake to the exhaust manifold of a typical combustion engine. The figure also shows all of the controls and sensors along that path, together with the connections between the sensors and an engine condition analyser which controls the valve mixer.

Air enters at the air intake 10 and passes to an air filter box 12 from which it enters the valve mixer 14. In the valve mixer 14, the air is mixed with propane from a propane intake box 16 which receives propane from a propane convertor (which converts the propane from liquid to vapour), which in turn receives liquid propane through a shut-off solenoid 20 from a propane supply tank 22. A valve mixer driver 24 controls the valve mixer 14 in a manner which will subsequently be described.

Returning to the valve mixer 14, the mixed gases from this device pass a throttle plate 26 which is controlled by a throttle plate control 28. In an automobile, the throttle plate control would be the accelerator pedal.

Referring to the right-hand side of Figure 1, the components illustrated affect the engine condition analyser 58. An air valve vacuum sensor 30 determines the difference of pressure between the balance line detection point 32 located upstream of the valve mixer 14, and the air valve vacuum detection point 34 located downstream of the valve mixer 14. This quantity may be referred to as the air valve vacuum.

A manifold vacuum sensor 36 detects the manifold vacuum below the throttle plate 26, this being the approximate vacuum of the gases entering the engine cylinders. If desired, an oxygen sensor 38 can be employed, which senses the available oxygen in the products of combustion in the exhaust manifold 40 utilizing an oxygen sensor head 42. The engine is shown at 44.

An engine rpm sensor 46 measures the engine speed by a tachometer 48. A CO & HC sensor 50, connected to a CO & HC detection head 52 senses the level of carbon monoxide and hydrocarbon in the exhaust manifold (if desired). The box 54 refers to an ignition on/off indicator, and turns the unit on when the car is turned on or the engine is turned on. A temperature compensation unit 56 may be provided, to allow for variations in ambient air temperature or engine temperature.

The various sensed values are fed to an engine condition analyser 58 which controls the air valve driver supply 60, which in turn runs the valve mixer driver. The engine condition analyser 58 also controls the solenoid driver which is adapted to shut off the propane solenoid 20 when the engine is not operating.

The most simplified version of a system in which the valve mixer of this invention could be utilized is one in which the items 38, 46, 50 and 56 are omitted and an analyser device merely seeks to keep the pressure drop between the detection points 32 and 34 (i.e. upstream and downstream of the valve mixer 14) at a constant or substantially constant value. As will be seen from the discussion that follows relating to the other figures, the maintenance of a preselected pressure drop across the valve mixer 14 will tend to keep the proportion of propane to combustion air substantially constant, regardless of the flow, i.e. regardless of the engine demand for the fuel mixture. In the more complex version of the system represented by the inclusion of all of the elements shown in Figure 1, the additional sensors may be utilized to allow the analyser 58 to select a different pressure drop across the valve mixer 14, thus causing the fuel mixture to be slightly leaner or slightly richer, depending upon operating conditions.

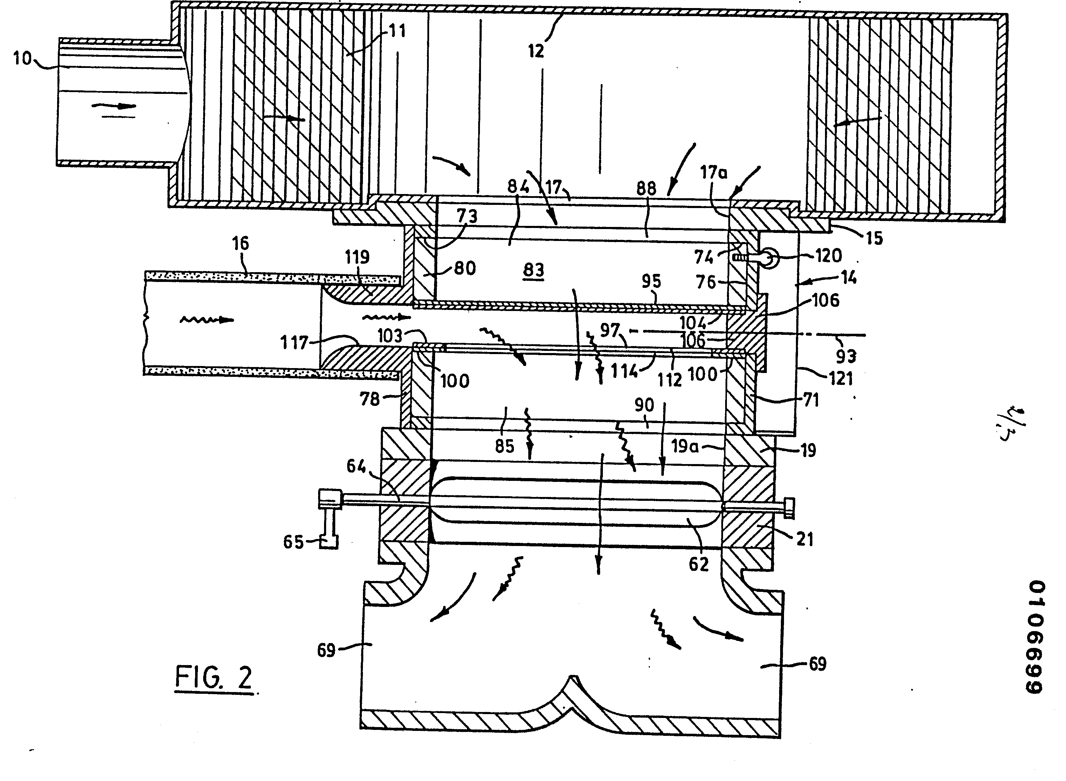

Attention is now directed to Figure 2, which shows the air intake 10 of a typical air filter 12, containing filter media 11 through which the air must pass in order to have access to the valve mixer shown generally at 14 in Figure 2. An adaptor plate 15 allows a secure mounting of the air filter 11 with respect to the valve mixer 14. The air filter 11 has a central, lower opening 17 which communicates with the valve mixer 14 through an opening 17a in the adaptor plate 15. The propane intake is identified by the numeral 16 at the left in Figure 2, and is shown as the end of a hose, the other end of which would be connected to the propane converter 18 mentioned in connection with Figure 1.

The specific construction of the valve mixer 14 will be given subsequently, but first it should be pointed out, referring to Figure 2, that the gases leaving the valve mixer 14 pass through a further adaptor plate 19 (having an aperture 19a), to a throttle body 21 which includes a butterfly valve 62 connected to an arm 64 with a control member 65 connected in the usual manner to the automobile accelerator or other hand- or foot-control device. From the throttle body 21, the gas mixture passes into the engine intake manifold 67, and thence through passageways 69 to the various engine cylinders.

Attention is now directed simultaneously to Figures 2, 3 and 4, for a more detailed description of the valve mixer 14.

The valve mixer 14 includes a body 71 in the general shape of a rectangular parallelepiped which has a cylindrical cavity 73 defined by a cylindrical wall 74 and a flat end wall 76. The body 71 is capped with an end plate 78. Within the cylindrical cavity 73 is a rotary valve member 80 in the form of a cylinder which snugly but rotatably fits within the cylindrical cavity 73, and takes up virtually the entire volume of the cavity 73. The rotary valve member 80 has an axially elongate, diametrally extending passageway 83 which may be said to have an inlet end 84 and an outlet end 86 at opposed locations on the rotary valve member 80.

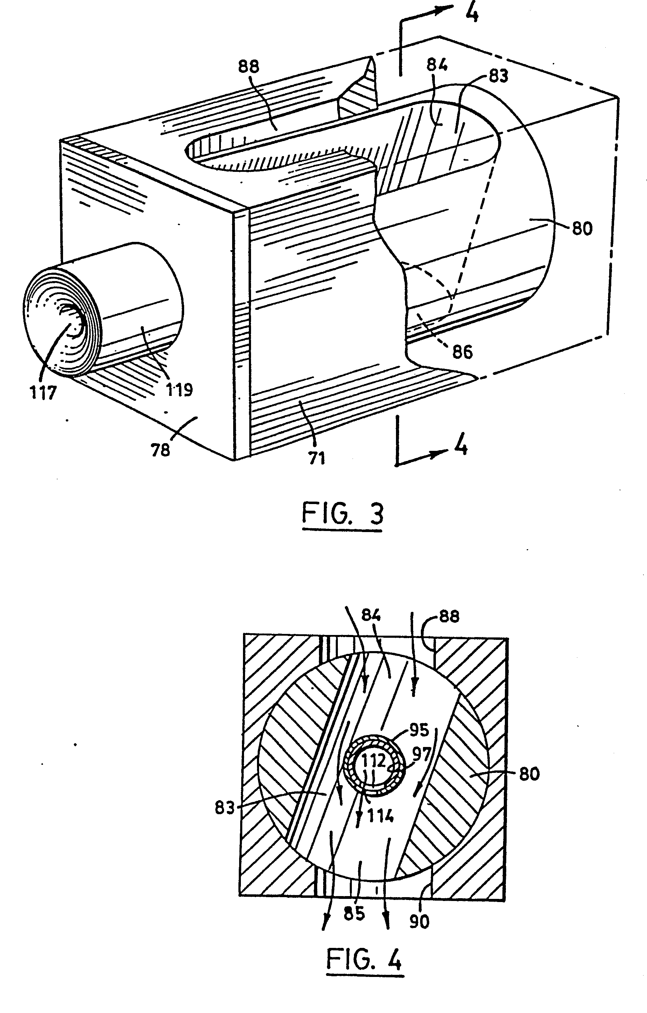

The body 71 defines an elongate inlet port 88 and a corresponding but opposed outlet port 90. As can be seen in Figure 4, it is possible to rotate the rotary valve member 80 to a position in which the passageway 83 is exactly aligned with the ports 88 and 90, thus

0106699

providing the least restriction to the passage of gas from the inlet port 88 to the outlet port 90. As the rotary valve member 80 is gradually rotated away from this aligned position, for example to the position shown in Figure 4, a gradually increasing restriction and blockage is offered to the flow of gases between the inlet portion 88 and the outlet port 90. It is possible to move the rotary valve member 80 to an angular position in which no gas can flow between the inlet port 88 and the outlet port 90.

In Figure 2, the broken line 93 defines the axis of rotation for the rotary valve member 80, and located coaxially with respect to the axis 93 are two nested tubes, specifically an outer tube 95 and an inner tube 97, the outer one snugly embracing the inner one, but permitting mutual rotation. The outer tube 95 is fixed with respect to the rotary valve member 80, while the inner tube 97 is fixed with respect to the body 71. Specifically, the rotary valve member 80 has two cylindrical bores 100 at its two axial ends, and into the bores 100 the outer tube 95 is press-fit, swaged or otherwise fixed. The inner tube 97 has a free-floating left end 103, and is secured at its rightward end 104 to a plug 106. The plug 106 is threaded into a tapped bore at the right end of the body 71 in Figure 2, and has a leftwardly extending boss 108 over which the rightward end 104 of the inner tube 97 is press-fitted.

Both of the tubes 95 and 97 have openings or apertures which are located downstream with respect to the downward flow of combustion air through the device, as pictured in Figure 2. The inner tube 97 has an axially elongate opening 112 which is always aimed downwardly, i.e. away from the inlet port 88. The outer tube 95 has an axially elongate opening 114 which rotates with the rotary valve member 80, and which is always directed toward the movable end 85 of the passageway 83. This is clearly shown in Figure 4.

It will thus be understood that, as the rotary valve member 80 rotates to close off the path by which combustion air enters the passageway 83, so at the same time the openings 112 and 114 become progressively out of registry, and thus squeeze off the entry of propane or other fuel gas which arrives at the interior of the inner tube 97 through the axial opening 117 in an axial boss 119 to which the hose 16 is connected.

It will thus be apparent that the pathway for combustion air and the pathway for propane are both progressively opened or closed by similar amounts, thus ensuring that the ratio of propane to combustion air will retain substantially constant.

In order to shift the rotary valve member 80 to a desired angular orientation, a pin member 120 is used, the pin member 120 being screwed tightly into the rotary valve member 80, and projecting out through an arcuate slot having its centre of curvature at the axis 93. The pin member 120 is controlled through appropriate linkages from a primary driving means which may be an electric motor driving an eccentric wheel connected to a suitable linkage. Alternatively, other means may also be employed to rotate the rotary valve member 80. Ultimately, the control of the rotary valve member 80 is exerted by the engine condition analyser 58 controlling the air valve driver supply 60.

The operation of the device of this invention is now readily understood. As the butterfly valve 62 is moved in the direction corresponding to a call for more power from the engine, the engine cylinder suction in the manifold 67 is more directly communicated to the outlet port 90 of the body 71, and the vacuum sensor 30 will thus detect an increase in the pressure drop across the valve mixer 14. This in turn will cause the engine condition analyser to control the air valve driver supply 60 in such a way that the rotary valve member 80 moves in the direction which will cause less of a constriction in the pathway for combustion air along the passageway 83. Looking at Figure 4, this would be achieved by rotating the rotary valve member 80 in the counter-clockwise direction. Such rotation will reduce the pressure drop across the valve mixer 14, to the point where the pre-selectived value is again attained.

Conversely, if the butterfly valve 62 is moved in the direction calling for lower engine power, it will in effect isolate the cylinder suction in the manifold 67 from the outlet portion 90 of the body 71, thus causing the pressure drop across the valve mixer 14 to drop. This will elicit an instruction to rotate the rotary valve member 80 in a direction to increase the pressure drop, which would be accomplished in Figure 4 by rotating it in the clockwise direction.

As an illustrative example only, the system described hereinabove may be set to operate at a nominal valve mixer pressure drop of 10 inches water column. When used with a linear propane converter, this nominal value may be used throughout the range of power for the engine. For a non-linear propane converter, or a system which has a tendency to run lean during full throttle, the analyser 58 can be adjusted to increase the air valve vacuum at high throttle levels, thereby increasing the proportion of propane.

It is to be understood that the particular shapes and configurations of the passageways and apertures described above are not to be considered limiting of this invention. For example, the tubes 95 and 97 may have individual, substantially circular openings spaced apart along their lengths, rather than a single, axially elongate opening. Likewise, the passageway 83 could be circular in cross section. The particular design will depend upon the maximum air intake rate required for the engine in question.

A linkage cover 121 may be provided to protect the linkage from the environment, thus avoiding the risk that dust, grease, etc. may interfere with the proper operation of the device.

It will be appreciated that the valve mixer 14 of the present invention promotes a considerable amount of cutting-edge turbulence, particularly at low speeds or low flow. Under low speed conditions, the rotary valve member

9

0106699

80 will be rotated so that only a small entry area is permitted for air passing into the passageway 83. Looking at Figure 4, the rotary valve member 80 would be rotated somewhat further in the clockwise direction, for example, and this would cause a good deal of cutting-edge turbulence at the leftward side of the upper end 84 of the passageway 83. Such turbulence, and the good mixing which it promotes, is quite important at idling speeds.

The intake manifold vacuum of the engine can be used by this system to adjust the nominal pressure drop across the valve mixer 14 in such a way as to compensate for non-linearity in the propane converter. Generally speaking, when high flow rates are drawn from a typical propane converter (which converts propane from the liquid state to the gaseous state), the quantity drawn off at the higher demand (higher vacuum), does not remain proportional to the vacuum, but approaches a limit which is an inherent characteristic of the converter itself.

Accordingly, since an aim of the present system is to seek to maintain the proportion of propane to air at a constant value, the non-linearity of the converter will cause the mixture to become more lean at higher flow rates, unless some counter-balancing effect were in force. In order to compensate for the tendency of the mixture to become lean at higher flow rates, the manifold vacuum sensor 36 will detect a decrease in vacuum (due to the fact that the throttle is fully open or substantially so), and this is signalled to the engine condition analyser 58, which adjusts the "nominal" pressure drop called for across the valve mixer 14 in the direction which will richen the mixture. Specifically, the pressure drop across the valve mixer would be increased in order to draw more propane.

Conversely, when the engine is idling or slowing down, and the throttle closes so as to produce a high manifold vacuum, this increased vacuum can be sensed and used to make the propane/air mixture become more lean, by decreasing the pressure drop across the valve mixer 14.

CLAIMS:

-10-

0106699

1. A valve and mixer device for mixing two gases, comprising:

a body,

a valve member in said body, the outer surface of the valve member being a surface of revolution,

the body defining an inlet port and an outlet port communicating with said outer surface at two spaced-apart locations thereon,

the valve member having an internal passageway adapted to interconnect the two parts when the valve member is in a first angular position, and to block access between the two ports when the valve member is in a second angular position,

characterized in that there is provided:

a first conduit within said passageway coaxial with said valve member and fixed thereto to turn therewith,

a second conduit within said first conduit and fixed with respect to the body,

first aperture means in said first conduit and second aperture means in said second conduit, the first and second aperture means being in registry when the valve member is in said first angular position, and being out of registry when the valve member is in said second angular' position,

and passage means by which one of the gases can reach the inside of the second conduit.

2. The invention claimed in claim 1, in which the valve member is a cylinder, the passageway being substantially diametral of the cylinder, the two ports being antipodally located, the first and second aperture means opening toward the outlet port when in registry.

3. The invention claimed in claim 2, in which the passageway is elongated in the axial direction of the cylinder.

4. The invention claimed in claim 3, in which the first and second aperture means are axially elongate slots in the conduits.

5.　　　　　The invention claimed in claim 1, further comprising means for rotating the valve member to a desired angular position and retaining it there.

6.　　　　　The invention claimed in claim 5, in which the valve member is a cylinder, the passageway being substantially diametral of the cylinder, the two ports being antipodally located, the first and second aperture means opening toward the outlet port when in registry.

7.　　　　　A method of delivering a substantially constant ratio of two gases to an intake in which a varying suction arises, utilizing a valve and mixer device for mixing the two gases, the device having:

a body, a valve member in said body, the outer surface of the valve member being a surface of revolution, the body defining an inlet port and an outlet port communicating with the outer surface at two spaced-apart locations thereon, the valve member having an internal passageway adapted to interconnect the two ports when the valve member is in a first angular position, and to block access between the two ports when the valve member is in a second angular position,

characterized in that there is provided:

a first conduit within said passageway coaxial with the valve member and fixed thereto to turn therewith, a second conduit within said first conduit and fixed with respect to the body, first aperture means in said first conduit and second aperture means in said second conduit, the first and second aperture means being in registry when the valve member is in said first angular position, and being out of registry when the valve member is in said second angular position, and passage means by which one of the gases can reach the inside of the second conduit,

the method comprising the steps:

(a) placing said inlet port in communication with one of the gases,

(b) placing said passage means in communication with the other of said gases,

(c) placing said outlet port in communication with said intake,

(d) detecting the pressure drop between a first location upstream of said valve member and a second location downstream of said valve member, and

(e) when the pressure drop departs from a preselected value, adjusting the angular position of the valve member in the direction which tends to restore the pressure drop to said preselected value.

8.     A method of delivering a substantially constant ration of two gases to an intake where a varying suction exists, in which one gas is passed through an inlet port to the inlet end of a passageway in a rotary valve, thence to the outlet end of the passageway, thence through an outlet port, thence to said intake,

characterized by the steps:

(a) passing the other gas to a first tube extending along the axis of the rotary valve within said passageway,

(b) providing a second tube closely enveloping the first, one tube being non-rotating, the other being mounted to rotate with the rotary valve, the tubes having apertures which are in registry when the rotary valve is oriented so that the passageway communicates with both ports, and

(c) adjusting the angular orientation of the rotary valve to maintain a substantially constant nominal pressure drop between two points respectively upstream and downstream of said rotary valve.

9.     The combination of a body snugly containing a rotary valve having a passageway therethrough, the body defining inlet and outlet ports communicating with respective ends of the passageway when the rotary valve is in a first angular position,

characterized in that there are provided two nested tubes axially of the rotary valve, one tube turning with the valve and the other fixed with respect to the body, the tubes having apertures which are in registry when the rotary valve is in said first angular position, and means for admitting a gas to the innermost of the two tubes.

10.        The invention set forth in claim 9, in which said last-mentioned means admits the gas axially of the tube, the combination further including means for rotating the rotary valve to a desired angular position and retaining it there.

11.        The method claimed in claim 8, in which said one gas is air and said other gas is propane, the propane being provided in gaseous form by a propane converter which is non-linear at higher rates of throughput, and in which said nominal pressure drop is adjusted to compensate for the converter non-linearity by the step of:

        (e) sensing the vacuum in the engine intake manifold, and when this decreases substantially to indicate that the throttle is wide open or substantially so,

        (f) increasing said nominal pressure drop to attempt to richen the two-gas mixture.

12.        The method claimed in claim 11, in which when the intake manifold vacuum is sensed to increase, indicating that the engine is idling or slowing down, the said nominal pressure drop is decreased to make the propane/ air mixture leaner.

FIG. 1

PROPANE SUPPLY TANK 22

PROPANE SHUT-OFF SOLENOID 20

PROPANE CONVERTER 18

PROPANE INTAKE 16

VALVE MIXER DRIVER 24

THROTTLE PLATE CONTROL 28

EXHAUST MANIFOLD 40

CO & HC DETECTION HEAD 52

OXYGEN SENSOR HEAD 42

AIR INTAKE 10

AIR FILTER 12

VALVE MIXER 14

THROTTLE PLATE 26

ENGINE 44

TACHOMETER 48

BALANCE LINE DETECTION POINT 32

AIR VALVE VACUUM DETECTION POINT 34

MANIFOLD VACUUM DETECTION POINT

IGNITION ON/OFF INDICATION 54

TEMPERATURE COMPENSATION 56

AIR VALVE VACUUM SENSOR 30

MANIFOLD VACUUM SENSOR 36

OXYGEN SENSOR 38

ENGINE RPM SENSOR 46

CO & HC SENSOR 50

AIR VALVE DRIVER SUPPLY 60

ENGINE CONDITION ANALYZER 58

SOLENOID DRIVER

0106699

FIG. 2

0106699

3/3

FIG. 3

FIG. 4